# EUROPEAN PATENT APPLICATION

(11) **EP 4 527 692 A1**
(43) Date of publication of application: **26.03.2025**
(21) Application number: 23198936.9
(22) Date of filing: 21.09.2023
(51) Int. Cl.: B60Q 1/50, G01S 13/931

(54) **NOTIFYING OTHERS OF DETECTION STATUS TO MITIGATE ACCIDENT RISK**

(71) Applicant: VOLVO TRUCK CORPORATION, 405 08 Göteborg (SE)
(72) Inventor: QUIBRIAC, Yann, 69007 Lyon (FR); BONEFONS, Adrien, 69003 LYON (FR)
(74) Representative: Ström & Gulliksson AB

(57) **Abstract**

A computer system (700) comprising processing circuitry (702) is disclosed. The processing circuitry (702) is configured to obtain sensing data (22) from a sensor (50) of a vehicle (10), the sensing data (22) being indicative of an object (20) within a predefined area (a1) of the vehicle (10), and comprising positional information of the object (20) in relation to the vehicle (10). The processing circuitry (702) is further configured to control a plurality of exterior lights (42) based on the positional information such that a first set of the exterior lights (42) closer to the object (20) operate by a first mode of operation and a default set of the exterior lights (42) farther from the object (20) operate by a default mode of operation different from the first mode of operation.

## Description

### TECHNICAL FIELD

The disclosure relates generally to object detection. In particular aspects, the disclosure relates to notifying others of detection status to mitigate accident risk. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Advanced driver assistance systems (ADAS) enhance safety and improve the driving experience for both autonomous and non-autonomous vehicles, such as to prevent collisions. Vehicle sensors may detect and track various objects in their surroundings, including other vehicles and/or vulnerable road users (VRUs) (e.g., pedestrians, cyclists, etc.). This information enables vehicle systems to analyze potential collision risks and take corrective measures to avoid accidents, such as driver alerts and/or autonomous evasive actions. Object detection around vehicles facilitates safe driving, avoiding collisions, protecting vulnerable road users, optimizing traffic flow, facilitating parking, and/or enabling the navigation of autonomous vehicles.

### SUMMARY

According to a first aspect of the disclosure, a computer system comprising processing circuitry is provided. The processing circuitry is configured to obtain sensing data from a sensor of a vehicle, the sensing data being indicative of an object within a predefined area of the vehicle, and comprising positional information of the object in relation to the vehicle. The first aspect of the disclosure may seek to notify others of their detection status. A technical benefit may include real-time feedback of potential dangers such that the others (e.g., road users, pedestrians, etc.) may adjust their behaviour. An additional technical benefit may include improving compliance with traffic regulations since people are more likely to adhere to rules and regulations when they are aware that they are detected. An additional technical benefit may include improved traffic safety, particularly in heavy traffic scenarios.

Optionally in some examples, including in at least one preferred example, the first mode of operation includes at least one of a flashing frequency, an optic guide light, a flashing duration, a light color, a light intensity, a light intensity shift, and/or an indicia projection. Technical benefits may include improved light visibility, improved notice to grab a person's attention, and/or improved communication to the person (e.g., road user or pedestrian).

Optionally in some examples, including in at least one preferred example, the processing circuitry is configured to obtain the sensing data by receiving raw sensing data from the sensor, and processing the raw sensing data. Technical benefits may include simplicity, cost-effectiveness and reduced processing requirements.

Optionally in some examples, including in at least one preferred example, the processing circuitry is configured to obtain the sensing data by receiving processed sensing data from the sensor. Technical benefits may include advanced object recognition, contextual understanding and adaptive learning behaviour.

Optionally in some examples, including in at least one preferred example, the processing circuitry is further configured to filter the sensing data based on at least one of dimensions of the object, an object class of the object, a movement status of the vehicle, a distance between the object and the exterior lights, a motion and/or speed of the object, a reflectivity of the object, ambient conditions, time of the day, environmental conditions, sound or noise level, and/or energy consumption requirements. Technical benefits may include improved accuracy, optimized resource utilization, reduced amounts of data requiring processing, customized response and control and adaptability to external conditions.

Optionally in some examples, including in at least one preferred example, the processing circuitry is further configured to dynamically adjust a size of the predefined area based on said filtered sensing data. A technical benefit may include providing a customized sensing area based on prevailing circumstances such that data resources can be saved.

Optionally in some examples, including in at least one preferred example, the processing circuitry is further configured to dynamically adjust a sensing responsiveness of the sensor based on said filtered sensing data. A technical benefit may include providing a customized sensing responsiveness based on prevailing circumstances such that data resources can be saved.

Optionally in some examples, including in at least one preferred example, the processing circuitry is further configured to disable or enable one or more of the exterior lights based on said filtered sensing data. A technical benefit may include saving resources where one or more sensors need not be activated and improving the detection accuracy where one or more sensors need to be activated.

Optionally in some examples, including in at least one preferred example, the sensing data is further indicative of at least one second object within the predefined area of the vehicle, and comprising second positional information of the at least one second object in relation to the vehicle, wherein the processing circuitry is further configured to control a second set of lights closer to the at least one second object to operate by a second mode of operation different from the default mode of operation. A technical benefit may include providing the benefits as addressed with respect to the first aspect of the disclosure also for a number of second objects. Consequently, the detection and traffic safety and other factors may be further improved.

Optionally in some examples, including in at least one preferred example, the processing circuitry is further configured to control a corner set of lights at a corner portion of the vehicle based on the positional information and the second positional information by a corner mode of operation, the corner mode of operation being different from the default mode of operation, wherein the corner portion extends from a first side of the vehicle by which the object is sensed, to a second side of the vehicle by which the at least one second object is sensed, the first and second sides each comprising one light from among the corner set of the lights. A technical benefit of corner light control may include warning objects of other objects not directly visible from respective sides of the vehicle. This may further improve the traffic safety.

Optionally in some examples, including in at least one preferred example, the corner mode of operation is different from the first and/or second modes of operation. A technical benefit may include obtaining customized light indications for different objects in different scenarios.

Optionally in some examples, including in at least one preferred example, the processing circuitry is further configured to cause concurrent control of the first, second, default and corner sets of lights. A technical benefit may include an improved awareness and adaptable light control in response to real-time feedback of objects located near the vehicle.

According to a second aspect of the disclosure, a vehicle comprising the computer system of the first aspect is provided. The second aspect of the disclosure may seek to notify others of their detection status. A technical benefit may include real-time feedback of potential dangers such that the users may adjust their behaviour. An additional technical benefit may include improving compliance with traffic regulations since people are more likely to adhere to rules and regulations when they are aware that they are detected. An additional technical benefit may include improved traffic safety, particularly in heavy traffic scenarios

Optionally in some examples, including in at least one preferred example, the vehicle further comprising an LED comprising the plurality of lights being arranged at predefined locations exterior to the vehicle; and a sensor configured to obtain sensing data being indicative of objects within predefined areas of the vehicle. A technical benefit by providing the LED belt may include increasing the visibility and attention-grabbing features of the lights such that the awareness of the objects is increased.

Optionally in some examples, including in at least one preferred example, the LED belt is mounted to an outer periphery longitudinally and laterally extending around the vehicle. A technical benefit may include an increased visibility and attention-grabbing features of the lights such that the awareness of the objects is increased. Moreover, such arrangement may be easy to install and quick to detach.

According to a third aspect of the disclosure. An LED belt comprising a plurality of LEDs is provided. The LED belt is adapted to be arranged at an exterior of a vehicle, wherein the LED belt is configured to be controlled by the computer system according to the first aspect. The third aspect of the disclosure may seek to notify others of their detection status. A technical benefit may include real-time feedback of potential dangers such that the users may adjust their behaviour. An additional technical benefit may include improving compliance with traffic regulations since people are more likely to adhere to rules and regulations when they are aware that they are detected An additional technical benefit may include improved traffic safety, particularly in heavy traffic scenarios.

According to a fourth aspect of the disclosure, a computer-implemented method for notifying others of detection status is provided. The method comprises obtaining sensing data from a sensor of a vehicle, the sensing data being indicative of an object within a predefined area of the vehicle, and comprising positional information of the object in relation to the vehicle; and controlling a plurality of exterior lights based on the positional information such that a first set of the exterior lights closer to the object operate by a first mode of operation and a default set of the exterior lights farther from the object operate by a default mode of operation different from the first mode of operation. The fourth aspect of the disclosure may seek to notify others of their detection status. A technical benefit may include real-time feedback of potential dangers such that the users may adjust their behaviour. An additional technical benefit may include improving compliance with traffic regulations since people are more likely to adhere to rules and regulations when they are aware that they are detected An additional technical benefit may include improved traffic safety, particularly in heavy traffic scenarios.

According to a fifth aspect of the disclosure, a computer program product is provided. The computer program product comprises program code performing, when executed by processing circuitry, the method of the fourth aspect. The fifth aspect of the disclosure may seek to notify others of their detection status. A technical benefit may include real-time feedback of potential dangers such that the users may adjust their behaviour. An additional technical benefit may include improving compliance with traffic regulations since people are more likely to adhere to rules and regulations when they are aware that they are detected. An additional technical benefit may include improved traffic safety, particularly in heavy traffic scenarios.

According to a sixth aspect of the disclosure, a non-transitory computer-readable storage medium is provided. The non-transitory computer-readable storage medium comprises instructions, which when executed by the processing circuitry, cause the processing circuitry to perform the method of the fourth aspect. The sixth aspect of the disclosure may seek to notify others of their detection status. A technical benefit may include real-time feedback of potential dangers such that the users may adjust their behaviour. An additional technical benefit may include improving compliance with traffic regulations since people are more likely to adhere to rules and regulations when they are aware that they are detected. An additional technical benefit may include improved traffic safety, particularly in heavy traffic scenarios.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1A** is an exemplary side view illustration of a heavy-duty vehicle according to one example.
**FIG. 1B** is an exemplary front view illustration of a heavy-duty vehicle according to one example.
**FIG. 1C** is an exemplary rear view illustration of a heavy-duty vehicle according to one example.
**FIG. 2A** is an exemplary side view illustration of a sensor arrangement of a heavy-duty vehicle according to one example.
**FIG. 2B** is an exemplary side view illustration of a sensor arrangement of a heavy-duty vehicle according to one example.
**FIG. 2C** is an exemplary side view illustration of a sensor arrangement of a heavy-duty vehicle according to one example.
**FIG. 2D** is an exemplary side view illustration of a sensor arrangement of a heavy-duty vehicle according to one example.
**FIG. 2E** is an exemplary rear view illustration of a sensor arrangement of a heavy-duty vehicle according to one example.
**FIG. 3A** is an exemplary schematic block diagram visualizing a computer system being used by the heavy-duty vehicle for notifying an object of a detection status according to one example.
**FIG. 3B** is an exemplary schematic block diagram visualizing a computer system being used by the heavy-duty vehicle for notifying an object of a detection status according to one example.
**FIG. 4A** is an exemplary schematic illustration visualizing a lighting scheme for notifying an object of a detection status according to one example.
**FIG. 4B** is an exemplary schematic illustration visualizing a lighting scheme for notifying an object of a detection status according to one example.
**FIG. 5** is an exemplary schematic illustration visualizing a lighting scheme for notifying others of detection status according to one example.
**FIG. 6** is an exemplary schematic flowchart illustration of a method according to one example.
**FIG. 7** is a schematic diagram of a computer system for implementing examples disclosed herein according to one example.

### DETAILED DESCRIPTION

The detailed description set forth below provides information and examples of the disclosed technology with sufficient detail to enable those skilled in the art to practice the disclosure.

Hereinafter, certain embodiments will be described more fully with reference to the accompanying drawings. The invention described throughout this disclosure may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

The present disclosure concerns improvements in how exterior lights of a vehicle can be controlled such that users (e.g., road users or pedestrians) in the vicinity of the vehicle can perceive the detection status of themselves or others. A "detection status" as used herein refers to the current state or result of an object detection process. The detection status may indicate whether an object has been successfully detected or not, in what way the object has been or has not been detected, how other objects have been detected in relation to the object, and so forth. Generally, notifying others of detection status may involve providing real-time feedback about the presence or absence of objects around vehicles to facilitate safety and maneuvering around the vehicle.

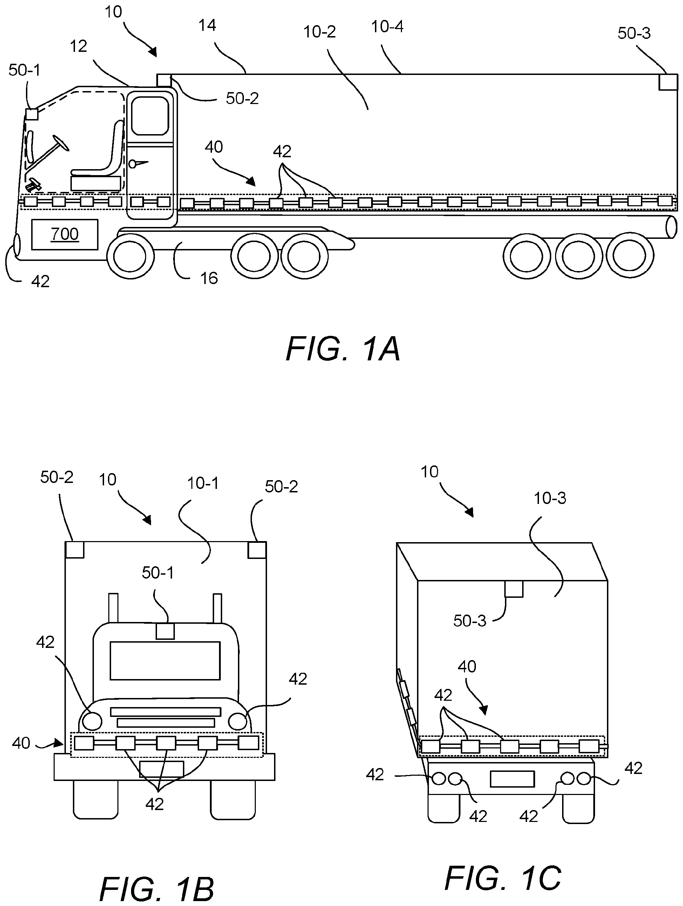

**FIGS. 1A-1C** are exemplary schematic illustrations of a vehicle **10.** The vehicle **10** is illustrated as a heavy-duty vehicle, but other vehicle types may be used. The vehicle **10** in **FIG. 1A** is shown from a first side **10-2,** and includes a corresponding second side **10-4** at an opposing side. This vehicle **10** comprises a tractor unit **12** which is arranged to tow a trailer unit **14.** In other examples, other heavy-duty vehicles may be employed, e.g., trucks, buses, and construction equipment. The vehicle **10** comprises vehicle units and associated functionality as would be understood and expected by a skilled person, such as a powertrain, chassis, and various control systems.

The vehicle **10** comprises a front view sensor **50-1,** a set of side view sensors **50-2,** and a rear sensor **50-3** (referred to generally as sensors **50).** In other examples, the vehicle **10** may include different sensor arrangements having one or more sensors **50** arranged at any suitable location with respect to the vehicle **10,** such as at the tractor unit **12** or the trailer unit **14,** a wheel portion **16,** and the like. The sensor **50** may be a camera, a lidar sensor, a radar sensor, an ultrasonic sensor or an infrared sensor. The sensor **50** is configured to sense the surroundings of the vehicle **10.** The range and responsiveness of the sensor **50** may depend on sensor type, sensor location, lens type, image sensor resolution, lighting conditions, ambient conditions (e.g., weather, humidity, fogginess), conditions of electronic components, potential obstructions in the field of view, latencies in computer systems, etc.

In some examples, the sensor **50** is a smart sensor configured to process sensed information and make a detection decision related to a detection of an object. The smart sensor may comprise a microcontroller, processor (e.g. PLC, CPU, DSP), FPGA, ASIC or any other suitable digital and/or analog circuitry capable of processing sensing data. The smart sensor may further comprise a memory implemented in any known memory technology, including but not limited to E(E)PROM, S(D)RAM or flash memory. The memory may be integrated with or internal to the microcontroller/processor/circuitry.

In other examples, the sensor **50** is a sensor not capable of processing information itself. Unlike smart sensors, which have built-in processing capabilities to interpret and analyze data, "dumb" sensors or "passive" sensors are devices that detect and measure physical properties or phenomena without any processing or interpretation of the sensing data being collected. These sensors typically generate raw analog or digital signals that need to be processed by external systems or devices to derive meaningful information or insights.

The sensor **50** may be operatively connected (e.g., wired or wirelessly) to suitable devices, systems and features of the vehicle **10.** The wireless interface and associated communication protocols may be based on any known communication technology known in the art, such as one or more of HTTP(S), TCP/IP, UDP, FTP, SMTP, DNS, DHCP, SSH, POP3, SCP, NFS, SFTP, ICMP, ARP, RTP, RTCP, IEEE 802.11, IEEE 802.15, ZigBee, WirelessHART, WiFi, Bluetooth^{®}, BLE, RFID, WLAN, MQTT IoT, CoAP, DDS, NFC, AMQP, LoRaWAN, Z-Wave, Sigfox, Thread, EnOcean, mesh communication, any form of proximity-based device-to-device radio communication, LTE Direct, W-CDMA/HSPA, GSM, UTRAN, LTE, IPv4, IPv6, 6LoWPAN, IrDA, or 5GNR.

The vehicle **10** further comprises a plurality of exterior lights **42** (hereinafter referred to as lights **42** for reasons of brevity). The lights **42** are arranged exterior to the vehicle **10,** such that they may be directly or indirectly (for instance through a reflection) visible to objects in the vicinity of the vehicle **10.** The lights **42** may be any suitable device capable of emitting a light, such as OLEDS, QLEDs, Micro LEDs, RGB LEDs, projector lights. In this example, some of the lights **42** are comprised in an LED belt **40,** although this is optional. In some examples, the lights **42** may be incorporated with pre-existing lights of the vehicle **10** such that further warning indicators may be generated. Exemplary pre-existing lights of the vehicle **10** may include braking lights, headlights, rear lights, emergency alert lights, construction zone warning lights, lane changing signals, hazard lights, deceleration indicators, road awareness lights, turn signal lights, fog lights, and/or any additional type of lights which may be utilized by various types of vehicles. In some examples, the pre-existing lights of the vehicle **10** and the lights **42** may be controlled in tandem. In other examples, the pre-existing lights of the vehicle **10** may replace one or more of the lights **42** such that some of the inventive concepts of this disclosure may be provided without necessarily requiring separate lights **42** mounted to the vehicle **10.** In other examples, the pre-existing lights of the vehicle **10** replace the lights **42.** Advantages of utilizing pre-existing lights of the vehicle **10** in this disclosure may involve providing more versatile ways of warning others of their notification status, and potentially to a cheaper cost as fewer additional lights **42** may be used.

The LED belt **40** and the associated lights **42** may be arranged at an exterior of the vehicle **10.** For example, the LED belt **40** may be mounted to an outer periphery longitudinally and laterally extending around the vehicle **10.** The LED belt **40** in this example covers corner portions of the vehicle **10.** In alternative examples, the LED belt **40** may be mounted to other parts of the vehicle **10,** such as at the truck unit **12,** the trailer unit **14,** a middle portion, upper portion or the wheel portion **16** of the vehicle **10.** To this end, the arrangement of the LED belt **40** is not limited to any particular location on the vehicle **10.**

Different arrangements of the LED belt **40** and the associated lights **42** may serve different purposes. Although the general objective is to notify others of their detection status, this may be done in various different ways depending on a plurality of factors. One such factor may include where the lights **42** are arranged in relation to different parts of the vehicle **10.** For example, lights **42** arranged at lower portions of the vehicle **10** may be more suitable for conveying a notification status to a pedestrian, while lights **42** arranged at upper portions of the vehicle **10** may be more suitable for conveying a notification status to a driver of another vehicle, such as a truck driver typically sitting at an elevated height compared to a pedestrian. Another factor may include what type of vehicle **10** the lights **42** are arranged on. For example, construction equipment such as a forklift may appropriately include lights **42** at the forks thereof, while a truck having one or more trailing units attached thereto may include lights **42** similar to what is shown in **FIGS. 1A-C****.** Yet another factor may include what purpose the vehicle **10** is used for. For example, trucks used for driving in long-distance convoys may not need as many lights **42** compared to trucks used in logistics facilities or other heavily-trafficked areas where danger risks might be higher. Yet another factor may include what environments and associated ambient conditions the vehicle **10** is operating in. For example, it may be known beforehand that the vehicle **10** is likely to be driving during night where the ambient lighting conditions are reduced. To this end, additional lights **42** may be desired in order to appropriately convey notifications to others surrounding the vehicle **10** and account for the diminished lighting conditions. Yet another factor may include geographical information pertaining to where the vehicle **10** is operating. For example, vehicles **10** typically operating in urban or rural areas may desire different arrangements of the lights **42.** These and other factors may be decided before the lights **42** are arranged to the vehicle **10,** and may potentially be changed depending on prevailing operating circumstances of the vehicle **10.**

In some examples, the LED belt **40** and the associated lights **42** may be movable with respect to the vehicle **10.** This may be useful in scenarios where the prevailing operating circumstances of the vehicle **10** experience changes. Such changes may involve the vehicle **10** being stationed at logistic facilities, rerouted from rural areas to urban areas, used for construction purposes in more or less trafficked areas, and so forth. In such examples, the LED belt **40** and the associated lights **42** may be removably attached to the vehicle **10** using one or more fasteners. Fasteners for connecting the lights **42** may include clips, clamps, hook-and-loop fasteners, suction cups, magnetic mounts, adhesives, gel pads, cling films, binder clips, command strips, magnetic tape, elastic bands or straps, to name a few exemplary fasteners.

The lights **42** are in the figures spaced apart from one another by a distance. The lights **42** may be horizontally, vertically and/or diagonally spaced apart from one another by the distance. The distance may for instance be in the interval of 0.1 m to 5.0 m, such as 0.1 m, 0.5 m, 1.0 m, 2.0 m, and so forth. The distance may be the same between all of the lights **42.** The distance may vary between two or more of the lights **42.** The distance may be a first distance at one side (e.g. rear) of the vehicle **10** and a second distance at another side (e.g. front) of the vehicle **10.** The lights **42** may in other examples be interconnected with no distance, or a distance less than 0.1 m, in between one another. For instance, the lights **42** may be directly attached to one another such that they appear as one larger unit having a plurality of lights **42.**

The lights **42** may be in wireless or wired connection to one another, possibly via a connecting member arranged to house the wire and/or respective transmitters/receivers for transferring signals in the wireless connection.

In the shown examples the LED belt **40** is arranged in a substantially linear pattern along the vehicle **10.** In other examples, the lights **42** may be arranged in any other pattern, such as in a circular, triangular, quadratic, rectangular, zigzag, or meander-like pattern. The selected pattern may differ between the different sides **10-1, 10-2, 10-3, 10-4** of the vehicle **10.** In some examples, the LED belt **40** may cover an entire portion of the vehicle **10,** or at least a sub-portion of the vehicle **10,** such as the entire rear of the vehicle **10.** One such example that may be realized is a light panel comprising a plurality of lights **42** together forming a larger cohesive light structure.

The lights **42** are not limited to a particular size or shape. For example, the lights **42** may be LED strips being approximately 5 mm to 10 mm in width and length. In another example, the lights **42** may be LED light bulbs being approximately 60 mm in diameter. In another example, the lights **42** may be panel indicators being around 5 mm in diameter.

The LED belt **40** and/or the lights **42** may be operatively connected to suitable devices, systems and features of the vehicle **10,** for instance through any wired or wireless connection as explained above in relation to the sensor **50.**

The vehicle **10** further comprises a computer system **700.** The computer system **700** is advantageously operatively connected to all suitable devices, systems and features of the vehicle **10,** such as the sensor **50** and the lights **42.** The computer system **700** is configured to obtain sensing data from the sensor **50.** The sensing data is indicative of an object within a predefined area of the vehicle **10.** The sensing data comprises positional information of the object in relation to the vehicle **10.** The computer system **700** is configured to control the lights **42** based on the positional information. The controlling is performed such that different set of lights **42** operate by different modes of operation. A mode of operation is in the context of the present disclosure to be interpreted as being associated with a lighting setting. To this end, different modes of operation may involve providing different lighting in order to notify others in the vicinity of the vehicle **10** of their detection status, including but not limited to one of (1) whether they have been detected, (2) in what way they have been detected, (3) to what extent they have been detected, and/or (4) how they have been detected in relation to others in the vicinity of the vehicle **10.**

A first mode of operation involves some type of active light emission. This is to indicate that the object has been detected in the vicinity of the vehicle **10.** Correspondingly, a default mode of operation involves some type of inactive light emission. An object may thus know whether it has been detected thanks to the inactive or active light emission. A first set of lights **42** is adapted to operate by the first mode of operation, and a default set of lights **42** is adapted to operate by the default mode of operation, where the first set of lights **42** are closer to the object than the default set of lights **42.** The object is accordingly notified of its detection status based on its position in relation to the vehicle by the set of lights **42** being closer to the object. Correspondingly, the object is notified which lights **42** of the vehicle **10** operate by the default mode of operation. An object may thus know in what way they have been detected, i.e., which one (or more) of the lights at which position(s) is/are recognizing the presence of said object.

The first mode of operation may include at least one of a flashing frequency, an optic guide light, a flashing duration, a light color, a light intensity, a light intensity shift, and/or an indicia projection. By way of providing these types of different indicators, the object may be notified to what extent it has been detected.

In some examples, different colored lights may indicate a distance between the object and the vehicle **10** and/or other objects. Red lights may warn the object that it is dangerously close to the vehicle, such as within 1.0 m, and a collision risk is thus higher compared to e.g. a green or white light. In other examples, lights flashing with a higher frequency may be an indicator of a higher collision risk compared to lights flashing with a lower frequency. In other examples, an indicia projection projecting a "STOP" sign or similar may be an indicator of a higher collision risk compared to no indicia projection.

Control of the lights **42** according to the first mode of operation and the default mode of operation is advantageously applied for any number of detected objects in the vicinity of the vehicle **10.** Each object being detected in the vicinity of the vehicle **10** may thus be notified of its detection status independently of one another. For each additional object being detected in the vicinity of the vehicle **10,** a respective set of lights **42** may be controlled by a respective mode of operation, said respective set of lights **42** being arranged closer to the detected object.

In some examples, the computer system **700** is configured to filter the sensing data based on dimensions of the object (e.g. size or shape), an object class of the object, a movement status of the vehicle **10,** a distance between the object and the lights **42,** a motion and/or speed of the object, a reflectivity of the object, ambient conditions, time of the day, environmental conditions, sound or noise level, energy consumption levels, traffic conditions, security or safety conditions, a number of surrounding objects, and so forth. The computer system **700** may be adapted to carry out the control of the lights **42** based on the filtered sensing data.

Filtering of the sensing data may involve processing and manipulating the obtained data with the purpose of extracting relevant information and/or enhancing the quality of the data. Enhancements may involve reducing noise, classifying objects, removing unwanted artifacts, and so forth. Filtering algorithms that may be applied by the computer system **700** involve, for example, noise reduction, smoothing, frequency analysis, outlier detection, data interpolation or extrapolation, event detection, data fusion, and the like. The computer system **700** may be configured to carry out the filtering using a Kalman filter, particle filter, moving average filter, median filter or a low-pass/high-pass filter, to name a few exemplary filtering techniques.

The filtered sensing data may be used for dynamically adjusting the size of the predefined areas being monitored by the sensor **50.** Although the sensor **50** may monitor a predefined area having a default size, it may be useful to either decrease or increase said size to adapt the scope of the monitoring or focus on specific regions of interest. By way of example, in heavy-traffic situations, it may be confusing to have the sensor **50** monitor large areas, especially since this might trigger activation or deactivation of a plurality of lights **42** at high rates such that the object becomes unaware of whether the detection potentially refers to another object. Other examples include e.g. specific intersections where objects are only sensed at one or more sides of the vehicle **10** and the other sides are generally empty, which may be an indication that the size of the predefined areas at the generally empty size of the vehicle **10** may be increased while the size of the predefined areas at the other one or more sides may be decreased. The skilled person realizes other such scenarios in, for example, areas with high or low traffic congestion, accident situations, and so forth.

The computer system **700** may use the filtered sensing data for dynamically adjusting a sensing responsiveness of the sensor **50.** Similar to the above, certain situations may call for a lower or higher sensing responsiveness. For example, in dangerous traffic zones where there are a plurality of objects, the sensing responsiveness may be increased, and in less dangerous traffic zones with few or none objects the sensing responsiveness may be decreased.

The computer system **700** may use the filtered sensing data for disabling or enabling one or more of the plurality of lights **42.** Such control may be triggered where it is not necessarily desired to notify others of detection status to save power. One exemplary situation may be realized when the vehicle **10** is driving and there are a plurality of object, such as leaves, bushes, trees or other such non-human objects, being detected at either side of the vehicle **10** that need not be notified of their detection status.

The computer system **700** may use the filtered sensing data for controlling the lights **42** based on what type of object class is being associated with the detected object. For example, if the detected object is a vehicle, the light emission may need to be more noticeable compared to if the object is a pedestrian or bicyclist. The more noticeable light emission may be provided by enabling additional lights **42,** controlling the lights **42** to emit light at a higher frequency, for a longer duration, with a particular color, and so forth.

The computer system **700** may use the filtered sensing data for controlling the lights **42** based on a distance between the detected object and the vehicle **10.** For example, if the object is detected within a predetermined range of the vehicle **10,** such as within 1.0 m of the vehicle **10,** the light emission may need to provide an indication that there is a higher collision risk according to some of the examples explained above (higher frequency, projected indicator, red light, etc.)

The computer system **700** may use the filtered sensing data for controlling the lights **42** based on a number of objects being detected. For example, the detection may utilize feature detection and tracking, object recognition, plane detection, and/or scene understanding techniques, such as ARKit or similar frameworks, for identifying individual objects among a group of objects. In these scenarios, an adjusted light emission may be desired such as to enable the lights **42** being closest to not only each individual object, but also the group of objects as a whole. For instance, a child may be walking next to the vehicle **10** with a parent, the child and parent being of different heights. In this example, the lights **42** may be controlled to be activated in a vertically extending way such as to account for the tallest object which in this case is the parent. In examples where there are objects all around the vehicle **10,** such as in heavy trafficked areas where a plurality of pedestrians, bicyclists and/or other vehicles are surrounding the vehicle **10.** The computer system **700** may cause a controlled deactivation of all of the lights. This may be useful for power savings purposes where no meaningful detection could be enabled due to the number of objects surrounding the vehicle **10.**

The computer system **700** may use the filtered sensing data for controlling the lights **42** based on an orientation and/or moving direction of the detected object. For example, if it is recognized that the object is moving away from the vehicle **10,** it may be of lesser relevance to enable the first mode of operation.

The computer system **700** may implement a machine learning model configured to carry out intelligent filtering of the sensing data and control of the lights **42.** The machine learning model may be trained on sensing data for a plurality of different types of objects and generate control patterns for control of the lights **42** based on deviations in the sensing data. By way of example, a certain type of sensed object may conceive a certain light setting in one way while another type of sensed object can conceive the same light setting in a different way. Accordingly, by obtaining different types of sensing data and performing intelligent analysis by the machine learning model, the control can be adapted in runtime operation of the computer system **700** to improve the perception of the lights, and thus increase the safety for the prevailing traffic situation. In addition, the machine learning model may be configured to receive feedback on previously controlled lights **42** such that future control can be improved. A type of the object is just one exemplary input that can be assessed, other inputs include any of the information used to filter the data according to the above. By way of example, the machine learning model may employ supervised or unsupervised learning algorithms known in the art, including but not limited to neural networks, binary, multi-class or multi-label classifications, clustering algorithms, regression algorithms, support vector machines, kernel estimation, decision trees, and the like.

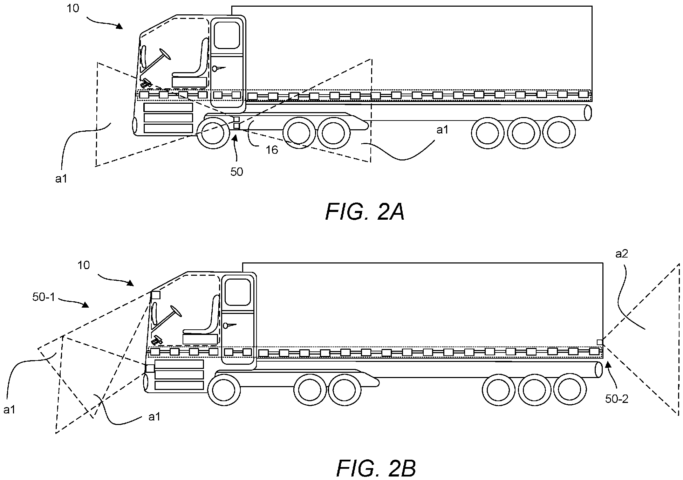

**FIGS. 2A-E** show various exemplary arrangements of the sensor **50.** Although these images depict specific sensor arrangements and locations, none of them are to be construed as limiting to the scope of the disclosure.

In **FIG. 2A****,** the vehicle **10** comprises a sensor **50** being arranged at a wheel portion **16** of the vehicle **10** and an opposing wheel portion on the opposing side of the vehicle **10.** In this example, the sensor **50** is a radar sensor configured to sense a predefined area **a1** at respective sides of the vehicle. In this example, the predefined area **a1** generally covers a front side portion of the vehicle **10,** although the sensor **50** may be configured to cover the entire side **10-2** (and opposing side) of the vehicle **10.**

In **FIG. 2B****,** the vehicle **10** comprises a front sensor **50-1** and a rear sensor **50-2.** In this example, the front sensor **50-1** is composed of a camera generally arranged on top of the windscreen of the vehicle **10,** and a radar sensor generally arranged by the front headlights of the vehicle **10.** The camera and the radar sensor are together configured to sense a predefined area **a1** generally covering a front portion of the vehicle **10.** The rear sensor **50-2** is a radar sensor generally arranged at a lower rear side of the vehicle **10,** and configured to sense a predefined area **a2** generally covering a rear portion of the vehicle **10.**

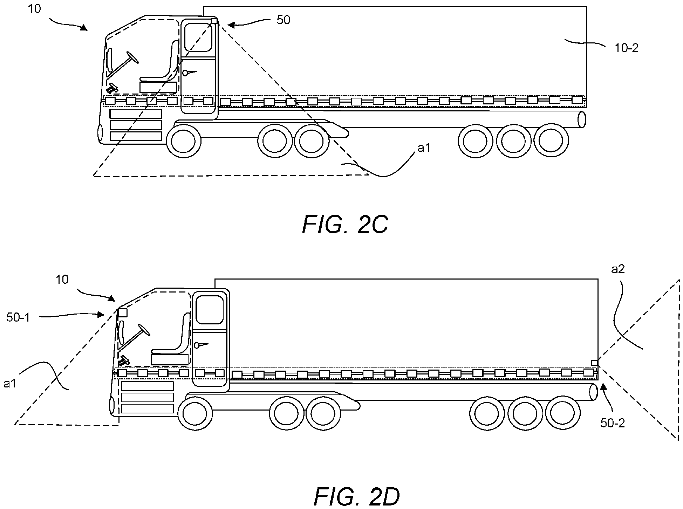

In **FIG. 2C****,** the vehicle **10** comprises a sensor **50** being arranged at a first side **10-2** of the vehicle **10** and at an opposing side of the vehicle **10.** In this example, the sensor **50** is a radar sensor configured to sense a predefined area **a1** at respective sides of the vehicle. In this example, the predefined area **a1** generally covers a front side portion of the vehicle **10,** although the sensor **50** may be configured to cover the entire side **10-2** (and opposing side) of the vehicle **10.**

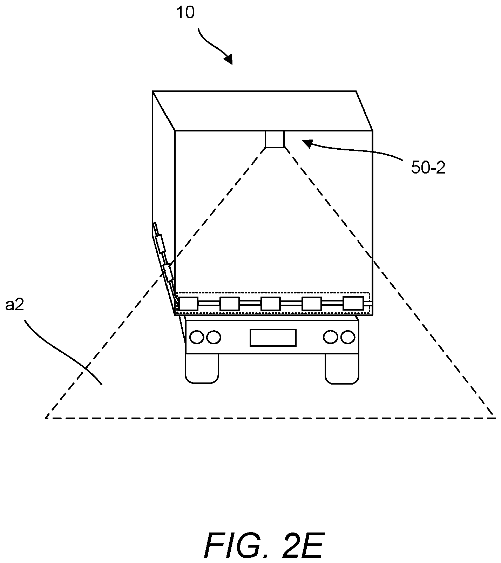

In **FIG. 2D****,** the vehicle **10** comprises a front sensor **50-1** and a rear sensor **50-2.** In this example, the front sensor **50-1** is composed of a camera generally arranged on top of the windscreen of the vehicle **10.** The camera is configured to sense a predefined area **a1** generally covering a front portion of the vehicle **10.** The rear sensor **50-2** is a radar sensor generally arranged at a lower rear side of the vehicle **10,** and configured to sense a predefined area **a2** generally covering a rear portion of the vehicle **10.** The rear sensor **50-2** is further shown from a rear view of the vehicle **10** in **FIG. 2E****.**

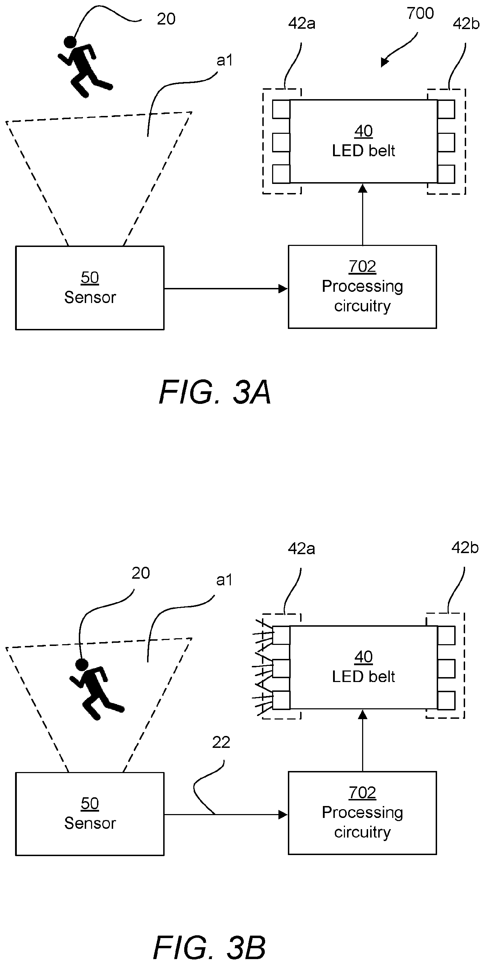

With reference to **FIGS. 3A-B**, an exemplary computer system **700** is shown. The computer system **700** comprises processing circuitry **702.** The processing circuitry **702** is configured to obtain sensing data **22** from a sensor **50** of a vehicle **10** (not shown). The sensing data **22** is indicative of an object **20,** in this example being a human person, within a predefined area **a1** of the vehicle **10.** The sensing data **22** comprises positional information of the object **20** in relation to the vehicle **10.** The processing circuitry **702** is configured to control a plurality of exterior lights **42** based on the positional information such that a first set of the exterior lights **42a** closer to the object **20** operate by a first mode of operation, and a default set of exterior lights **42b** farther from the object **20** operate by a default mode of operation different from the first mode of operation. In the example, the lights **42** are comprised in an optional LED belt **40.**

In **FIG. 3A****,** an object **20** is outside of the predefined area **a1** covered by a sensing range of the sensor **50.** To this end, sensing data **22** of the object **20** is not obtained, and the processing circuitry **702** of the computer system **700** are controlling the lights **42** to be inactive.

In **FIG. 3B****,** the object **20** is within the predefined area **a1,** so the sensing data **22** being indicative of the object **20** is obtained. The sensing data **22** is sent to the processing circuitry **702** for further processing thereof. As discussed above, the sensor **50** may perform processing of the sensing data **22** if it is a smart sensor, otherwise the sensing data **22** is being sent in raw format to the processing circuitry **702.** The processing of the sensing data **22** results in the first set of lights **42a** closer to the object **20** being controlled to operate according to a first mode of operation, which in this case corresponds to a light emission mode. The default set of lights **42b** farther from the object **20** are controlled to operate according to a default mode of operation, the default mode of operation in this case being an inactive mode. The technical effect of this procedure is to enable awareness of the object's **20** detection status.

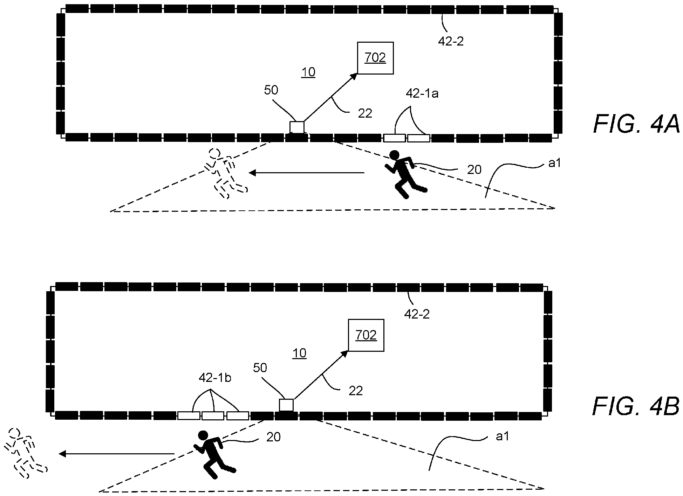

**FIGS. 4A-B** illustrate an exemplary usage scenario in which some of the examples of the present disclosure may be applied. **FIGS. 4A-B** show an illustrative outline of the vehicle **10.** The vehicle **10** comprises a plurality of exterior lights **42** distributed around the vehicle **10.** In shown example, the lights **42** are evenly distributed around the vehicle **10** and generally of the same size, although this is just for illustrative purposes. The processing circuitry **702** is arranged to obtain sensing data **22** from a sensor **50** once an object **20** is sensed within a predefined area **a1**.

In **FIG. 4A****,** the processing circuitry **702** is configured to control two sets of lights **42-1a, 42-2,** respectively. The first set of lights **42-1a** is controlled according to a first mode of operation and the default set of lights **42-2** is controlled according to a default mode of operation. The first set of lights **42-1a** is closer to the object **20** compared to the default set of lights **42-2.** In this example, the first set of lights **42-1a** comprises two individual lights.

In **FIG. 4B****,** the object **20** has moved from a first location within the predefined area **a1** to a second location within the predefined area **a2**. The processing circuitry **702** is thus still obtaining the sensing data **22** being indicative of the object **20** within the predefined area **a1**. As the object **20** is no longer located at the first location, a different set of lights **42-1b** is controlled to operate by the first mode of operation, and the set of lights **42-1a** which in **FIG. 4A** operated by the first mode of operation is now controlled to operate by the default mode of operation.

Although not explicitly shown, each intermediate location of the object **20** within the predefined **a1** while moving from the first location according to **FIG. 4A** to the second location according to **FIG. 4B** may have caused a plurality of different controls of the lights such that a set of light closer to the object **20** continuously operate by the first mode of operation compared to a set of light farther from the object **20.** The effect of such control procedure leads to that the lights controlled by the first mode of operation will "follow" the object **20** while said object **20** is moving along the vehicle **10,** and the object **20** will be aware of its detection status throughout this movement.

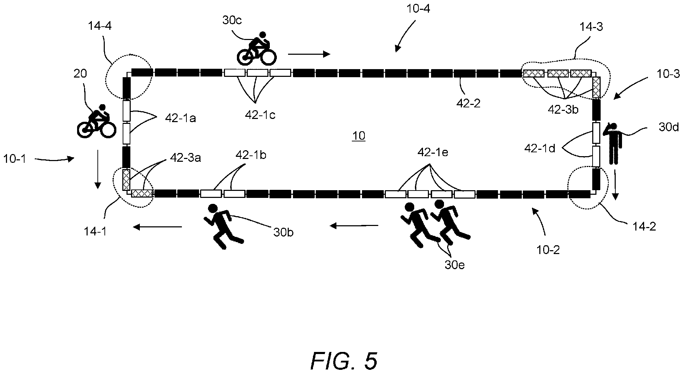

**FIG. 5** depicts an exemplary traffic scenario which may arise. As indicated by **FIG. 5****,** the present disclosure may manage detection status notifications of at least one second object **30.** Generally, sensing data may be indicative of any number of second objects **30** within a predefined area of the vehicle **10,** wherein the sensing data further comprising second positional information of the at least one second object **30** in relation to the vehicle **10.** The sensing data can be obtained such that the lights be controlled according to one or more of the examples presented herein, optionally with additional sets of lights being controlled for the additional objects **30.** Predefined areas are not explicitly shown in **FIG. 5****,** although it may be envisaged that the predefined area surrounds the entire vehicle **10,** i.e., sensing data being indicative of objects **20, 30** surrounding the vehicle **10** can be obtained. In alternative examples, a plurality of predefined areas may be defined for each sensor being adapted to sense the surroundings of the vehicle **10.** For visualization purposes, sensors and predefined areas are not explicitly shown in **FIG. 5****,** although it is realized that any of the examples herein of sensor arrangements and definitions of predefined areas can be envisaged.

**FIG. 5** shows a first object **20,** a second object **30b,** a third object **30c,** a fourth object **30d,** and a fifth object **30d** involving two persons. All of these objects are VRUs, although other stationary and/or moving objects may be envisaged. For each object, a corresponding set of light is controlled to operate by a second mode of operation different from the default mode of operation. The second mode of operation may correspond to the first mode of operation as explained herein. A first set of lights **42-1a** closer to the first object **20** is configured to operate by a first mode of operation. A second set of lights **42-1b** closer to the second object **30b** is configured to operate by a second mode of operation. A third set of lights **42-1e** closer to the third object **30c** is configured to operate by a third mode of operation. A fourth set of lights **42-1d** closer to the fourth object **30d** is configured to operate by a fourth mode of operation. A fifth set of lights **42-1e** closer to the fifth object **30e** is configured to operate by a fifth mode of operation. The second, third, fourth and fifth modes of operation may be the same or different. The second, third, fourth and fifth modes of operation may correspond to the first mode of operation. In addition, a default set of lights **42-2** is configured to operate a the default mode of operation.

Further seen in **FIG. 5** is control of corner sets of lights **42-3a, 42-3b** by a corner mode of operation. The corner mode of operation is different from the default mode of operation. In alternative examples, the corner mode of operation may be different from the first and/or the second modes (and/or third, fourth, fifth, and so forth, modes) of operation. In this example, two corner sets of lights **42-3a, 42-3b** are controlled, although other examples may involve control of at least one corner set of light. The vehicle **10** in this example comprises four corner portions **14-1, 14-2, 14-3, 14-4,** wherein each corner portion **14-1, 14-2, 14-3, 14-4** extends from a first side **10-1, 10-3** of the vehicle **10** to a second side **10-2, 10-4** of the vehicle **10.** First and second sides of the vehicle **10** shall in this context be interpreted as respective sides of the vehicle **10** that are adjacent to one another and by which respective objects **20, 30** are sensed. At least one light from among the corner set of lights located in between two sides is visible by the object located on each one of said two sides. The purpose of the corner control is to add additional danger awareness such that the object is informed of whether another object is located by an adjacent side of the vehicle.

As seen in **FIG. 5****,** a first corner set of lights **42-3a** located at a first corner portion **14-1** is controlled by a corner mode of operation being different from the first, second and default modes of operation (as indicated by the patterned appearance in the illustration). The control of the first corner set of lights **42-3a** is occurring due to the fact that the object **20** is sensed by a first side **10-1** and the second object **20b** is sensed by a second adjacent side **10-2.** The first corner set of lights **42-3a** is accordingly controlled to notify that a collision danger is apparent shall both of the objects **20, 30b** continue their respective movements towards one another. A similar control of a second corner set of lights **42-3b** is also carried out at a second corner portion **14-3** in between the sides **10-3, 10-4** of the vehicle **10** such that the objects **30c, 30d** are warned of a possible upcoming collision. To this end, one or more objects may be notified they have been detected in relation to others in the vicinity of the vehicle **10.**

The computer system may be configured to handle concurrent control of each one of the sets of lights, including two or more of the first, second, default and corner sets of lights.

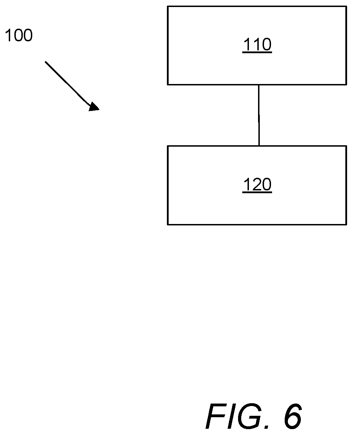

**FIG. 6** is a flowchart of a method **100** for notifying others of detection status according to an example. The method **100** comprises obtaining **110** sensing data **22** from a sensor **50** of a vehicle **10,** the sensing data **22** being indicative of an object **20** within a predefined area **a1** of the vehicle **10,** and comprising positional information of the **object** 20 in relation to the vehicle. The method 100 further comprises controlling **120** a plurality of exterior lights **42** based on the positional information such that a first set of the exterior lights **42** closer to the object operate by a first mode of operation and a default set of the exterior lights **42** farther from the object **20** operate by a default mode of operation different from the first mode of operation.

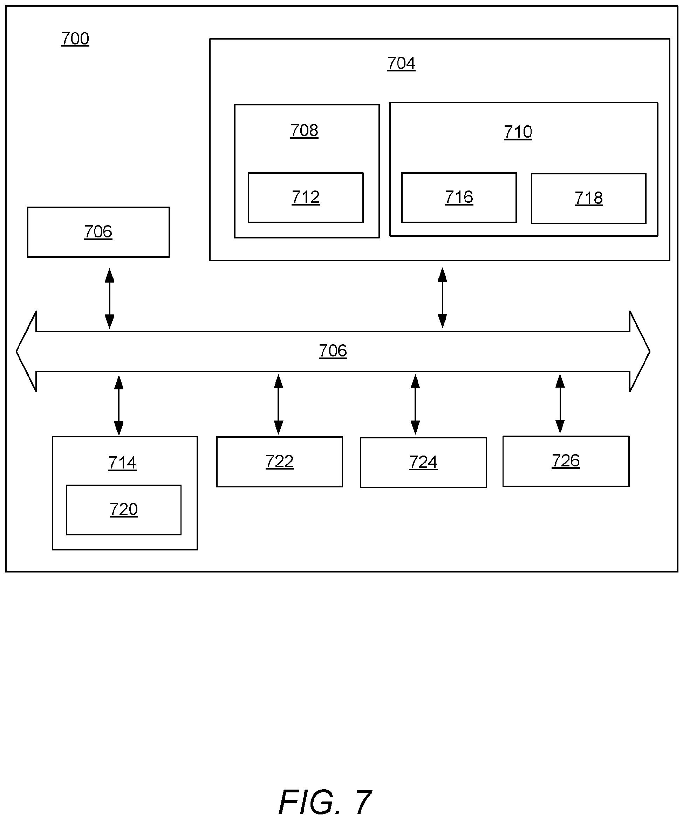

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system (700) comprising processing circuitry (702) configured to: obtain sensing data (22) from a sensor (50) of a vehicle (10), the sensing data (22) being indicative of an object (20) within a predefined area (a1) of the vehicle (10), and comprising positional information of the object (20) in relation to the vehicle (10); and control a plurality of exterior lights (42) based on the positional information such that a first set of the exterior lights (42) closer to the object (20) operate by a first mode of operation and a default set of the exterior lights (42) farther from the object (20) operate by a default mode of operation different from the first mode of operation.

Example 2: The computer system (700) of example 1, wherein the first mode of operation includes at least one of a flashing frequency, an optic guide light, a flashing duration, a light color, a light intensity, a light intensity shift, and/or an indicia projection.

Example 3: The computer system (700) of any one of examples 1-2, wherein the processing circuitry (702) is configured to obtain the sensing data (22) by: receiving raw sensing data from the sensor (50); and processing the raw sensing data.

Example 4: The computer system (700) of any one of examples 1-2, wherein the processing circuitry (702) is configured to obtain the sensing data (22) by receiving processed sensing data (22) from the sensor (50).

Example 5: The computer system (700) of any one of examples 1-4, wherein the processing circuitry (702) is further configured to filter the sensing data (22) based on at least one of dimensions of the object (20), an object class of the object (20), a movement status of the vehicle (10), a distance between the object and the lights (42), a motion and/or speed of the object (20), a reflectivity of the object (20), ambient conditions, time of the day, environmental conditions, sound or noise level, and/or energy consumption requirements.

Example 6: The computer system (700) of example 5, wherein the processing circuitry (702) is further configured to dynamically adjust a size of the predefined area (a1) based on said filtered sensing data (22).

Example 7: The computer system (700) of any one of examples 5-6, wherein the processing circuitry (702) is further configured to dynamically adjust a sensing responsiveness of the sensor (50) based on said filtered sensing data (22).

Example 8: The computer system (700) of any one of examples 5-7, wherein the processing circuitry (702) is further configured to disable or enable one or more of the plurality of lights (42) based on said filtered sensing data (22).

Example 9: The computer system (700) of any one of examples 1-8, wherein the sensing data (22) is further indicative of at least one second object (30) within the predefined area (a1) of the vehicle (10), and comprising second positional information of the at least one second object (30) in relation to the vehicle (10), wherein the processing circuitry (702) is further configured to control a second set of lights (42) closer to the at least one second object (30) to operate by a second mode of operation different from the default mode of operation.

Example 10: The computer system (700) of example 9, wherein the processing circuitry (702) is further configured to control a corner set of lights (42) at a corner portion (14) of the vehicle (10) based on the positional information and the second positional information by a corner mode of operation, the corner mode of operation being different from the default mode of operation, wherein the corner portion (14) extends from a first side (10-1) of the vehicle (10) by which the object (20) is sensed, to a second side (10-2) of the vehicle (10) by which the at least one second object (30) is sensed, the first and second sides (10-1, 10-2) each comprising one light (42) from among the corner set of the lights (42).

Example 11: The computer system (700) of example 10, wherein the corner mode of operation is different from the first and/or second modes of operation.

Example 12: The computer system (700) of any one of examples 10-11, wherein the processing circuitry (702) is further configured to cause concurrent control of the first, second, default and corner sets of lights (42).

Example 13: The computer system (700) of example 1, wherein the first mode of operation includes at least one of a flashing frequency, an optic guide light, a flashing duration, a light color, a light intensity, a light intensity shift, and/or an indicia projection, wherein the processing circuitry (702) is configured to obtain the sensing data (22) by: receiving raw sensing data from the sensor (50); and processing the raw sensing data, wherein the processing circuitry (702) is configured to obtain the sensing data (22) by receiving processed sensing data (22) from the sensor (50), wherein the processing circuitry (702) is further configured to filter the sensing data (22) based on at least one of dimensions of the object (20), an object class of the object (20), a movement status of the vehicle (10), a distance between the object and the lights (42), a motion and/or speed of the object (20), a reflectivity of the object (20), ambient conditions, time of the day, environmental conditions, sound or noise level, and/or energy consumption requirements, wherein the processing circuitry (702) is further configured to dynamically adjust a size of the predefined area (a1) based on said filtered sensing data (22), wherein the processing circuitry (702) is further configured to dynamically adjust a sensing responsiveness of the sensor (50) based on said filtered sensing data (22), wherein the processing circuitry (702) is further configured to disable or enable one or more of the plurality of lights (42) based on said filtered sensing data (22), wherein the sensing data (22) is further indicative of at least one second object (30) within the predefined area (a1) of the vehicle (10), and comprising second positional information of the at least one second object (30) in relation to the vehicle (10), wherein the processing circuitry (702) is further configured to control a second set of lights (42) closer to the at least one second object (30) to operate by a second mode of operation different from the default mode of operation, wherein the processing circuitry (702) is further configured to control a corner set of lights (42) at a corner portion (14) of the vehicle (10) based on the positional information and the second positional information by a corner mode of operation, the corner mode of operation being different from the default mode of operation, wherein the corner portion (14) extends from a first side (10-1) of the vehicle (10) by which the object (20) is sensed, to a second side (10-2) of the vehicle (10) by which the at least one second object (30) is sensed, the first and second sides (10-1, 10-2) each comprising one light (42) from among the corner set of the lights (42), wherein the corner mode of operation is different from the first and/or second modes of operation, and wherein the processing circuitry (702) is further configured to cause concurrent control of the first, second, default and corner sets of lights (42).

Example 14: A vehicle comprising the computer system (700) of any of examples 1-13.

Example 15. The vehicle of example 14, further comprising: an LED belt (40) comprising the plurality lights (42) being arranged at predefined locations exterior to the vehicle (10); and a sensor (50) configured to obtain sensing data (22; 32) being indicative of objects (20; 30) within predefined areas (a1; a2) of the vehicle (10).

Example 16: The vehicle of example 15, wherein the LED belt (40) is mounted to an outer periphery longitudinally and laterally extending around the vehicle (10).

Example 17: An LED belt (40) comprising a plurality of LEDs (42), wherein the LED belt (40) is adapted to be arranged at an exterior of a vehicle (10), wherein the LED belt (40) is configured to be controlled by the computer system (700) according to any one of examples 1-13.

Example 18: The LED belt (40) of example 17 being is mounted to an outer periphery longitudinally and laterally extending around the vehicle (10).

Example 19: The LED belt (40) of any of examples 17-18, being arranged to cover one or more corner portions of the vehicle (10).

Example 20: The LED belt (40) of any of examples 17-19, being mounted to a middle portion, upper portion and/or wheel portion of the vehicle (10).

Example 21: The LED belt (40) of any of examples 17-20, being operatively connected to the processing circuitry (702) through a wired or wireless connection.

Example 22: The LED belt (40) of any of examples 17-21, wherein the LED belt is detachably arranged to the vehicle (10).

Example 23: A computer-implemented method (100) for notifying others of detection status, comprising: obtaining (110) sensing data (22) from a sensor (50) of a vehicle (10), the sensing data (22) being indicative of an object (20) within a predefined area (a1) of the vehicle (10), and comprising positional information of the object (20) in relation to the vehicle (10); and controlling (120) a plurality of exterior lights (42) based on the positional information such that a first set of the exterior lights (42) closer to the object (20) operate by a first mode of operation and a default set of the exterior lights (42) farther from the object (20) operate by a default mode of operation different from the first mode of operation.

Example 24: A computer program product comprising program code for performing, when executed by processing circuitry (702), the method (100) of example 23.

Example 25: A non-transitory computer-readable storage medium comprising instructions, which when executed by processing circuitry (702), cause the processing circuitry (702) to perform the method (100) of example 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) comprising processing circuitry (702) configured to:
obtain sensing data (22) from a sensor (50) of a vehicle (10), the sensing data (22) being indicative of an object (20) within a predefined area (a1) of the vehicle (10), and comprising positional information of the object (20) in relation to the vehicle (10); and
control a plurality of exterior lights (42) based on the positional information such that a first set of the exterior lights (42) closer to the object (20) operate by a first mode of operation and a default set of the exterior lights (42) farther from the object (20) operate by a default mode of operation different from the first mode of operation.

2. The computer system (700) of claim 1, wherein the first mode of operation includes at least one of a flashing frequency, an optic guide light, a flashing duration, a light color, a light intensity, a light intensity shift, and/or an indicia projection.

3. The computer system (700) of any one of claims 1-2, wherein the processing circuitry (702) is further configured to filter the sensing data (22) based on at least one of dimensions of the object (20), an object class of the object (20), a movement status of the vehicle (10), a distance between the object and the exterior lights (42), a motion and/or speed of the object (20), a reflectivity of the object (20), ambient conditions, time of the day, environmental conditions, sound or noise level, and/or energy consumption requirements.

4. The computer system (700) of claim 3, wherein the processing circuitry (702) is further configured to dynamically adjust a size of the predefined area (a1) based on said filtered sensing data (22).

5. The computer system (700) of any one of claims 3-4, wherein the processing circuitry (702) is further configured to dynamically adjust a sensing responsiveness of the sensor (50) based on said filtered sensing data (22).

6. The computer system (700) of any one of claims 3-5, wherein the processing circuitry (702) is further configured to disable or enable one or more of the exterior lights (42) based on said filtered sensing data (22).

7. The computer system (700) of any one of claims 1-6, wherein the sensing data (22) is further indicative of at least one second object (30) within the predefined area (a1) of the vehicle (10), and comprising second positional information of the at least one second object (30) in relation to the vehicle (10),
wherein the processing circuitry (702) is further configured to control a second set of lights (42) closer to the at least one second object (30) to operate by a second mode of operation different from the default mode of operation.

8. The computer system (700) of claim 7, wherein the processing circuitry (702) is further configured to control a corner set of lights (42) at a corner portion (14) of the vehicle (10) based on the positional information and the second positional information by a corner mode of operation, the corner mode of operation being different from the default mode of operation,
wherein the corner portion (14) extends from a first side (10-1) of the vehicle (10) by which the object (20) is sensed, to a second side (10-2) of the vehicle (10) by which the at least one second object (30) is sensed, the first and second sides (10-1, 10-2) each comprising one light (42) from among the corner set of the lights (42).

9. The computer system (700) of claim 8, wherein the corner mode of operation is different from the first and/or second modes of operation.

10. The computer system (700) of any one of claims 8-9, wherein the processing circuitry (702) is further configured to cause concurrent control of the first, second, default and corner sets of lights (42).

11. A vehicle comprising the computer system (700) of any of claims 1-10.

12. An LED belt (40) comprising a plurality of LEDs (42), wherein the LED belt (40) is adapted to be arranged at an exterior of a vehicle (10), wherein the LED belt (40) is configured to be controlled by the computer system (700) according to any one of claims 1-10.

13. A computer-implemented method (100) for notifying others of detection status, comprising:
obtaining (110) sensing data (22) from a sensor (50) of a vehicle (10), the sensing data (22) being indicative of an object (20) within a predefined area (a1) of the vehicle (10), and comprising positional information of the object (20) in relation to the vehicle (10); and
controlling (120) a plurality of exterior lights (42) based on the positional information such that a first set of the exterior lights (42) closer to the object (20) operate by a first mode of operation and a default set of the exterior lights (42) farther from the object (20) operate by a default mode of operation different from the first mode of operation.

14. A computer program product comprising program code for performing, when executed by processing circuitry (702), the method (100) of claim 13.

15. A non-transitory computer-readable storage medium comprising instructions, which when executed by processing circuitry (702), cause the processing circuitry (702) to perform the method (100) of claim 13.

## Amended claims

### Amended claims in accordance with Rule 137(2) EPC.

1. A computer system (700) comprising processing circuitry (702) configured to:
obtain sensing data (22) from a sensor (50) of a vehicle (10), the sensing data (22) being indicative of a first object (20) and a second object (30) within a predefined area (a1) of the vehicle (10), and comprising first positional information of the first object (20) in relation to the vehicle (10) and second positional information of the second object (30) in relation to the vehicle (10); and
control a plurality of exterior lights (42) based on the first positional information and the second positional information such that:
a first set of the exterior lights (42) closer to the first object (20) operate by a first mode of operation, the first set of the exterior lights (42) being at a first side (10-1) of the vehicle (10);
- a second set of the exterior lights (42) closer to the second object (30) operate by a second mode of operation, the second set of the exterior lights (42) being at a second side (10-2) of the vehicle (10) and adjacent to the first side (10-1);
- a corner set of lights (42) at a corner portion (14) of the vehicle (10) operate by a corner mode of operation, the corner set of lights (42) extending from the first side (10-1) of the vehicle (10) to the second side (10-2) of the vehicle (10), the corner mode of operation being different from the first and/or second modes of operation; and
- a default set of the exterior lights (42) farther from the objects (20, 30) operate by a default mode of operation, the first mode of operation, the second mode of operation, and the corner mode of operation being different from the default mode of operation.

2. The computer system (700) of claim 1, wherein the first mode of operation includes at least one of a flashing frequency, an optic light guide, a flashing duration, a light color, a light intensity, a light intensity shift, and/or an indicia projection.

3. The computer system (700) of any one of claims 1-2, wherein the processing circuitry (702) is further configured to filter the sensing data (22) based on at least one of dimensions of the first and/or second object(s) (20, 30), an object class of the first and/or second objects (20, 30), a movement status of the vehicle (10), a distance between the first and/or second object(s) (20, 30) and the exterior lights (42), a motion and/or speed of the first and/or second objects (20, 30), a reflectivity of the first and/or second object(s) (20, 30), ambient conditions, time of the day, sound or noise level, and/or energy consumption requirements.

4. The computer system (700) of claim 3, wherein the processing circuitry (702) is further configured to dynamically adjust a size of the predefined area (a1) based on said filtered sensing data (22).

5. The computer system (700) of any one of claims 3-4, wherein the processing circuitry (702) is further configured to dynamically adjust a sensing responsiveness of the sensor (50) based on said filtered sensing data (22).

6. The computer system (700) of any one of claims 3-5, wherein the processing circuitry (702) is further configured to disable or enable one or more of the exterior lights (42) based on said filtered sensing data (22).

7. The computer system (700) of any one of claims 1-6, wherein the processing circuitry (702) is further configured to cause concurrent control of the first, second, default and corner sets of lights (42).

8. A vehicle comprising the computer system (700) of any of claims 1-7.

9. An LED belt (40) comprising a plurality of LEDs (42), wherein the LED belt (40) is adapted to be arranged at an exterior of a vehicle (10), wherein the LED belt (40) is configured to be controlled by the computer system (700) according to any one of claims 1-7.

10. A computer-implemented method (100) for notifying others of detection status, comprising:
obtaining (110) sensing data (22) from a sensor (50) of a vehicle (10), the sensing data (22) being indicative of a first object (20) and a second object (30) within a predefined area (a1) of the vehicle (10), and comprising first positional information of the first object (20) in relation to the vehicle (10) and second positional information of the second object (30) in relation to the vehicle (10); and
controlling (120) a plurality of exterior lights (42) based on the first positional information and the second positional information such that:
- a first set of the exterior lights (42) closer to the first object (20) operate by a first mode of operation, the first set of exterior lights (42) being at a first side (10-1) of the vehicle (10);
- a second set of the exterior lights (42) closer to the second object (30) operate by a second mode of operation, the second set of the exterior lights (42) being at a second side (10-2) of the vehicle (10) and adjacent to the first side (10-1);
- a corner set of lights (42) at a corner portion (14) of the vehicle (10) operate by a corner mode of operation, the corner set of lights (42) extending from the first side (10-1) of the vehicle (10) to the second side (10-2) of the vehicle (10), the corner mode of operation being different from the first and/or second modes of operation; and
- a default set of the exterior lights (42) farther from the objects (20, 30) operate by a default mode of operation, the first mode of operation, the second mode of operation, and the corner mode of operation being different from the default mode of operation.

11. The method (100) of claim 10, wherein the first mode of operation includes at least one of a flashing frequency, an optic light guide, a flashing duration, a light color, a light intensity, a light intensity shift, and/or an indicia projection.

12. The method (100) of any of claims 10-11, further comprising filtering the sensing data (22) based on at least one of dimensions of the first and/or second object(s) (20, 30), an object class of the first and/or second object(s) (20, 30), a movement status of the vehicle (10), a distance between the first and/or second object(s) (20, 30) and the exterior lights (42), a motion and/or speed of the first and/or second object(s) (20, 30), a reflectivity of the first and/or second object(s) (20, 30), ambient conditions, time of the day, sound or noise level, and/or energy consumption requirements.

13. The method (100) of claim 12, further comprising dynamically adjusting a size of the predefined area (a1) based on said filtered sensing data (22).

14. A computer program product comprising program code for performing, when executed by processing circuitry (702), the method (100) of claim 10.

15. A non-transitory computer-readable storage medium comprising instructions, which when executed by processing circuitry (702), cause the processing circuitry (702) to perform the method (100) of claim 10.
